# DEMANDE DE BREVET EUROPEEN

(11) **EP 3 698 923 A1**
(43) Date de publication de la demande: **26.08.2020**
(21) Numéro de dépôt: 20152044.2
(22) Date de dépôt: 15.01.2020
(51) Int. Cl.: B25B 13/48, F16B 39/32, B25B 27/02

(54) **OUTIL DE DÉVERROUILLAGE D'UN SYSTÈME DE VERROUILLAGE D'UN BOULON**

(30) Priorité: 15.02.2019 FR 1901544
(71) Demandeur: Airbus Operations SAS, 31060 Toulouse (FR)
(72) Inventeur: MESSINA, Paolo, 31100 TOULOUSE (FR)
(74) Mandataire: Fantin, Laurent

(57) **Abrégé**

L'invention a pour objet un outil de déverrouillage configuré pour déverrouiller un système de verrouillage immobilisant en rotation un écrou par rapport à une tige filetée, comprenant un anneau (68) configuré pour être positionné autour de la tige filetée en fonctionnement ainsi qu'au moins un doigt (70, 70'), s'étendant entre une première extrémité (70.1) reliée à l'anneau (68) et une deuxième extrémité (70.2) libre, configuré pour se loger et coulisser dans une gorge longitudinale de la tige filetée en fonctionnement, chaque doigt (70, 70') comportant une face avant (72.4) configurée pour coopérer avec au moins une languette du système de verrouillage afin d'empêcher son blocage dans l'une des gorges longitudinales de la tige filetée.

## Description

La présente demande se rapporte à un outil de déverrouillage d'un système de verrouillage d'un boulon.

Le document US6010289 décrit différents systèmes de verrouillage permettant d'immobiliser en rotation un écrou par rapport à une tige filetée d'un boulon.

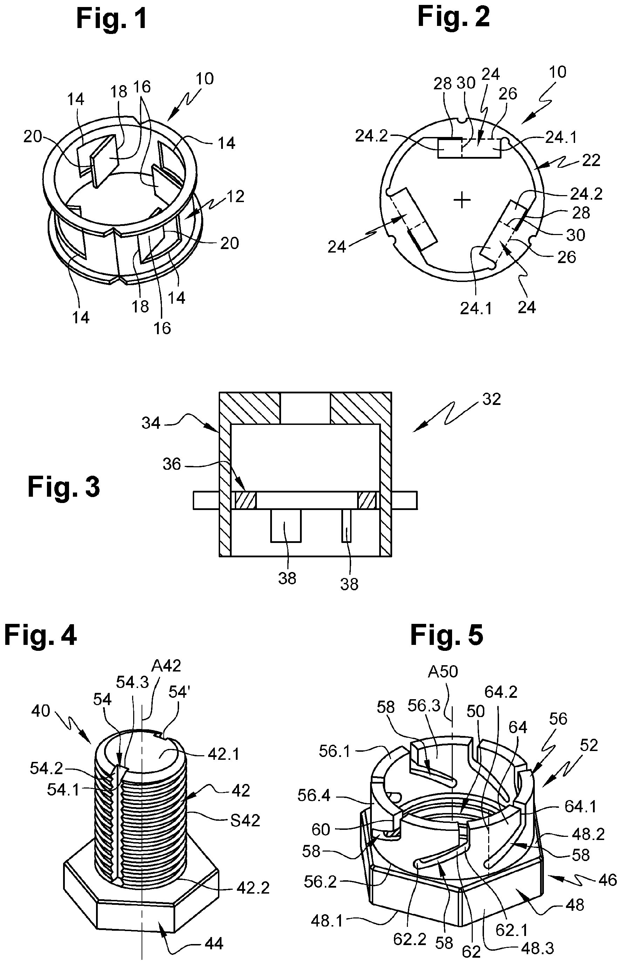

Selon un premier mode de réalisation visible sur la figure 1, un système de verrouillage 10, solidaire de l'écrou, se présente sous la forme d'une bague. Ce système de verrouillage 10 comprend un corps tubulaire 12 ayant un diamètre intérieur légèrement supérieur au diamètre de la tige filetée pour se positionner autour de cette dernière. Ce corps tubulaire 12 comprend plusieurs découpes en C 14, réparties sur la périphérie du corps tubulaire 12, formant chacune une languette 16 configurée pour occuper un état non déformé dans lequel la languette 16 est en saillie à l'intérieur du corps tubulaire 12 et partiellement logée dans une encoche prévue au niveau de la tige filetée ainsi qu'un état déformé dans lequel la languette 16 n'est plus logée dans l'encoche prévue au niveau de la tige filetée. Chaque languette 16 est reliée au reste du corps tubulaire 12 par une ligne de pliage 18 orientée parallèlement à l'axe de l'écrou et présente un bord libre 20 sensiblement parallèle à la ligne de pliage 18. Cette dernière et le bord libre 20 sont configurés de telle sorte que lorsque languette 16 est à l'état non déformé dans l'encoche de la tige filetée, elle empêche la rotation de l'écrou dans le sens du dévissage. Selon ce premier mode de réalisation, la languette se déforme lors du vissage. Lorsque l'écrou est correctement vissé, la languette 16 positionnée en face de l'encoche de la tige filetée revient à l'état non déformé et se loge dans l'encoche pour immobiliser l'écrou en rotation par rapport à la tige filetée.

Selon un deuxième mode de réalisation visible sur la figure 2, un système de verrouillage 10, solidaire de l'écrou, se présente sous la forme d'une rondelle 22 comportant plusieurs pattes 24 au niveau de son bord périphérique intérieur. Dans un état initial, les pattes 24 et la rondelle 22 sont coplanaires. Chaque patte 24 comprend une première partie 24.1, reliée à la rondelle 22 par une première ligne de pliage 26 approximativement perpendiculaire à une direction radiale, et une deuxième partie 24.2 séparée de la rondelle 22 par une découpe 28, positionnée dans le prolongement de la première ligne de pliage 26 et reliée à la première partie 24.1 par une deuxième ligne de pliage 30 perpendiculaire à la première ligne de pliage 26. La deuxième partie 24.2 forme une languette configurée pour occuper un état non déformé dans lequel les première et deuxième parties 24.1 et 24.2 sont approximativement coplanaires ainsi qu'un état déformé dans lequel la deuxième partie 24.2 pliée se loge dans l'une des encoches de la tige filetée et empêche la rotation de l'écrou dans le sens du dévissage. Pour pouvoir positionner la rondelle 22 autour d'une tige filetée, toutes les pattes 24 sont pivotées autour de la première ligne de pliage 26 afin que chacune d'elles soit positionnée dans un plan perpendiculaire à la rondelle 22. Selon ce deuxième mode de réalisation, lorsque l'écrou est correctement vissé, la deuxième partie 24.2 positionnée en face de l'encoche de la tige filetée est déformée pour immobiliser l'écrou en rotation par rapport à la tige filetée.

Quel que soit le mode de réalisation, il existe un espace périphérique entre le corps cylindrique 12 (ou la rondelle 22) et la tige filetée.

Le document US6010289 propose également un outil de déverrouillage 32, visible sur la figure 3, comprenant une douille 34 dans laquelle est positionnée une rondelle 36 supportant une pluralité de doigts longitudinaux 38. La rondelle 36 et les doigts longitudinaux 38 sont configurés pour que les doigts longitudinaux 38 puissent se positionner dans l'espace périphérique entre le corps cylindrique 12 (ou la rondelle 22) et la tige filetée. Ainsi, en faisant pivoter l'outil, les doigts longitudinaux 38 agissent sur la languette déformée et logée dans l'encoche de la tige filetée de manière à ce qu'elle ne coopère plus avec l'encoche. Dès lors, il est possible de dévisser l'écrou.

Ces modes de réalisation ne sont pas pleinement satisfaisants car il est nécessaire de prévoir un espace périphérique entre le corps cylindrique 12 (ou la rondelle 22) et la tige filetée pour pouvoir utiliser l'outil de déverrouillage. Cet espace périphérique conduit à augmenter la longueur des languettes ce qui tend à réduire leur résistance.

La présente invention vise à remédier à tout ou partie des inconvénients de l'art antérieur.

A cet effet, l'invention a pour objet un outil de déverrouillage configuré pour déverrouiller un système de verrouillage d'un boulon comportant une tige filetée présentant une surface latérale et au moins une gorge longitudinale qui s'étend à partir d'une première extrémité de la tige filetée, un écrou configuré pour se visser sur la tige filetée, ainsi qu'un système de verrouillage, solidaire de l'écrou, comportant au moins une languette configurée pour occuper un état non déformé dans lequel ladite languette n'immobilise pas en rotation l'écrou par rapport à la tige filetée ainsi qu'un état déformé dans lequel ladite languette est partiellement logée dans la gorge longitudinale et immobilise en rotation l'écrou par rapport à la tige filetée.

Selon l'invention, l'outil de déverrouillage comprend un anneau, configuré pour être positionné autour de la tige filetée en fonctionnement, ainsi qu'au moins un doigt, s'étendant entre une première extrémité reliée à l'anneau et une deuxième extrémité libre, configuré pour se loger et coulisser dans la gorge longitudinale de la tige filetée en fonctionnement, chaque doigt comportant une face avant délimitée par une première arête et une deuxième arête située en aval de la première arête selon un sens de dévissage de l'écrou, la face avant de chaque doigt présentant une première inclinaison telle que la première arête soit en retrait ou au niveau de la surface latérale de la tige filetée et que la deuxième arête soit en saillie ou au niveau de la surface latérale de la tige filetée.

Selon l'invention, l'espace entre la surface latérale de la tige filetée et la partie tubulaire supportant la ou les languette(s) peut être réduit au minimum dans la mesure où l'outil de déverrouillage ne comprend aucun élément se logeant dans cet espace.

Selon une autre caractéristique, la deuxième arête est en retrait par rapport à la surface latérale de la tige filetée.

Selon un mode de réalisation, la deuxième arête et la surface latérale de la tige filetée sont séparées d'une première distance de l'ordre de 0,5 mm.

Selon une autre caractéristique, la première arête est en saillie par rapport à la surface latérale de la tige filetée.

Selon un mode de réalisation, la première arête et la surface latérale de la tige filetée sont séparées d'une deuxième distance de l'ordre de 0,5 mm.

Selon une autre caractéristique, la face avant de chaque doigt comprend une deuxième inclinaison telle que chaque doigt présente une première épaisseur au niveau de la première extrémité du doigt supérieure à une deuxième épaisseur au niveau de la deuxième extrémité libre du doigt.

Selon un mode de réalisation, les première et deuxième épaisseurs présentent une différence d'épaisseur de l'ordre de 0,5 mm.

Selon une autre caractéristique, chaque doigt présente des première et deuxième faces latérales séparées d'une distance approximativement égale à celle séparant des première et deuxième parois latérales d'une gorge longitudinale.

Selon une autre caractéristique, l'outil de déverrouillage est configuré pour une tige filetée présentant deux gorges longitudinales diamétralement opposées et comprend deux doigts, un pour chaque gorge longitudinale, les doigts étant agencés de manière à ce que leurs faces arrières coulissent contre des parois de fond des deux gorges longitudinales en fonctionnement.

Selon une autre caractéristique, au moins chaque doigt de l'outil de déverrouillage est réalisé en, ou recouvert par, un matériau présentant un faible coefficient de frottement avec la gorge longitudinale de la tige filetée.

D'autres caractéristiques et avantages ressortiront de la description de l'invention qui va suivre, description donnée à titre d'exemple uniquement, en regard des dessins annexés parmi lesquels :
- La figure 1 est une vue en perspective d'un système de verrouillage qui illustre un premier mode de réalisation de l'art antérieur,
- La figure 2 est une vue de dessus d'un système de verrouillage qui illustre un deuxième mode de réalisation de l'art antérieur,
- La figure 3 est une coupe longitudinale d'un outil de déverrouillage qui illustre un mode de réalisation de l'art antérieur,
- La figure 4 est une vue en perspective d'une vis qui illustre un mode de réalisation de l'invention,
- La figure 5 est une vue en perspective d'un écrou équipé d'un système de verrouillage qui illustre un mode de réalisation de l'invention,
- La figure 6 est une vue latérale développée d'un écrou équipé d'un système de verrouillage qui illustre un mode de réalisation de l'invention,
- La figure 7 est une section d'un écrou équipé d'un système de verrouillage qui illustre un mode de réalisation de l'invention,
- La figure 8 est une vue de dessus développée d'un boulon équipé d'un système de verrouillage à l'état activé qui illustre un mode de réalisation de l'invention,
- La figure 9 est une vue en perspective selon un premier angle de vue d'un outil de déverrouillage qui illustre un mode de réalisation de l'invention,
- La figure 10 est une vue en perspective selon un second angle de vue d'un outil de déverrouillage qui illustre un mode de réalisation de l'invention,
- La figure 11 est une vue de dessus de l'outil de déverrouillage visible sur la figure 9,
- La figure 12 est une coupe transversale d'un outil de déverrouillage positionné dans une gorge longitudinale d'une vis qui illustre un mode de réalisation de l'invention,
- La figure 13 est une coupe longitudinale d'une partie d'un outil de déverrouillage positionné dans une gorge longitudinale d'une vis qui illustre un mode de réalisation de l'invention,
- La figure 14 est une coupe transversale élargie d'un outil de déverrouillage positionné dans une gorge longitudinale d'une vis qui illustre un mode de réalisation de l'invention, et
- La figure 15 est une coupe transversale élargie d'un outil de déverrouillage positionné dans une gorge longitudinale d'une vis qui illustre un mode de réalisation de l'invention.

Selon un mode de réalisation visible sur la figure 4, une vis 40 comprend une tige filetée 42 présentant un axe A42 et une surface latérale S42, ladite tige filetée 42 s'étendant entre une première extrémité 42.1 et une deuxième extrémité 42.2. La vis 40 comprend également un système pour l'immobiliser et/ou l'entraîner en rotation, comme par exemple une tête hexagonale 44 solidaire de la deuxième extrémité 42.2 de la tige filetée 42.

Sur la figure 5, un écrou 46 comprend un corps 48 et un trou taraudé 50, configuré pour se visser sur la tige filetée 42 de la vis 40, traversant le corps 48 et présentant un axe A50 confondu avec l'axe A42 de la tige filetée 42 lorsque l'écrou 46 est vissé sur la vis 40.

L'ensemble constitué de la tige filetée 42 et de l'écrou 46 forme un boulon.

Pour la suite de la description, une direction longitudinale est parallèle à l'axe A42 de la tige filetée 42 ou à l'axe A50 du trou taraudé 50 de l'écrou 46, une direction radiale est perpendiculaire à l'axe A42 de la tige filetée 42 ou à l'axe A50 du trou taraudé 50 de l'écrou 46, un plan longitudinal passe par l'axe A42 de la tige filetée 42 ou par l'axe A50 du trou taraudé 50 de l'écrou 46 et un plan transversal est un plan perpendiculaire à l'axe A42 de la tige filetée 42 ou à l'axe A50 du trou taraudé 50 de l'écrou 46.

Le corps 48 de l'écrou 46 comprend une première face transversale 48.1, une deuxième face transversale 48.2 et une face périphérique 48.3 reliant les première et deuxième faces transversales 48.1, 48.2, le trou taraudé 50 débouchant au niveau des première et deuxième faces transversales 48.1, 48.2. Selon une orientation, la tige filetée 42 est introduite dans le trou taraudé 50 de l'écrou 46 via la première face transversale 48.1. Le corps 48 de l'écrou 50 comprend un système pour l'immobiliser et/ou l'entraîner en rotation, comme par exemple une section hexagonale au niveau de la face périphérique 48.3, comme illustré sur la figure 5.

L'écrou 46 comprend un système de verrouillage 52 configuré pour immobiliser l'écrou 46 en rotation par rapport à la tige filetée 42.

Selon une caractéristique de l'invention, la tige filetée 42 comprend au moins une gorge longitudinale 54 qui s'étend à partir de la première extrémité 42.1 sur au moins une partie de la longueur de la tige filetée 42 (dimension prise selon la direction longitudinale). Selon une configuration visible sur la figure 4, chaque gorge longitudinale 54 s'étend de la première extrémité 42.1 jusqu'à la deuxième extrémité 42.2.

Selon un mode de réalisation, chaque gorge longitudinale 54 comprend une première paroi latérale 54.1, une deuxième paroi latérale 54.2 parallèle à la première paroi latérale 54.1 ainsi qu'une paroi de fond 54.3 perpendiculaire aux première et deuxième parois latérales 54.1, 54.2. Pour donner un ordre de grandeur, pour une tige filetée 46 présentant un diamètre de l'ordre de 20 mm, la largeur de la gorge longitudinale 54 (distance séparant les première et deuxième parois latérales 54.1 et 54.2) est de l'ordre de 3 mm. La profondeur de la gorge longitudinale 54 (dimension séparant la paroi de fond 54.3 de la gorge longitudinale 54 et la paroi latérale S42 de la tige filetée 42) est de l'ordre de 2 mm.

Selon un mode de réalisation visible sur la figure 4, la tige filetée 42 comprend deux gorges longitudinales 54, 54' diamétralement opposées.

En complément de la (ou des) gorge(s) longitudinale(s) 54, 54', le système de verrouillage 52 comprend une partie tubulaire 56, solidaire de l'écrou 46, coaxiale au trou taraudé 50, qui s'étend entre une première extrémité 56.1 et une deuxième extrémité 56.2 reliée à la deuxième face transversale 48.2 du corps 48 de l'écrou 46. Cette partie tubulaire 56 comprend une face intérieure 56.3, présentant un diamètre intérieur légèrement supérieur à celui du trou taraudé 50 (ou sensiblement égal à celui de la tige filetée 42), et une face extérieure 56.4 coaxiale à la face intérieure 56.3. Selon un mode de réalisation, pour une tige filetée de l'ordre de 20 mm, la partie tubulaire 56 a une épaisseur e (distance séparant les faces intérieure et extérieure 56.3, 56.4) de l'ordre de 1,5 mm et une hauteur H (distance séparant les première et deuxième extrémités 56.1, 56.2) de l'ordre de 7mm.

La partie tubulaire 56 comprend une pluralité de fentes 58, réparties régulièrement sur la périphérie de la partie tubulaire 56, reliant les faces intérieure et extérieure 56.3, 56.4.

Selon un mode de réalisation, chaque fente 58 débouche au niveau de la première extrémité 56.1 de la partie tubulaire 56 et s'étend sur au moins une partie de la hauteur de la portion tubulaire 56 (dimension prise entre les première et deuxième extrémités 56.1, 56.2).

Selon une configuration, chaque fente 58 s'étend de la première extrémité 56.1 jusqu'à la deuxième extrémité 56.2

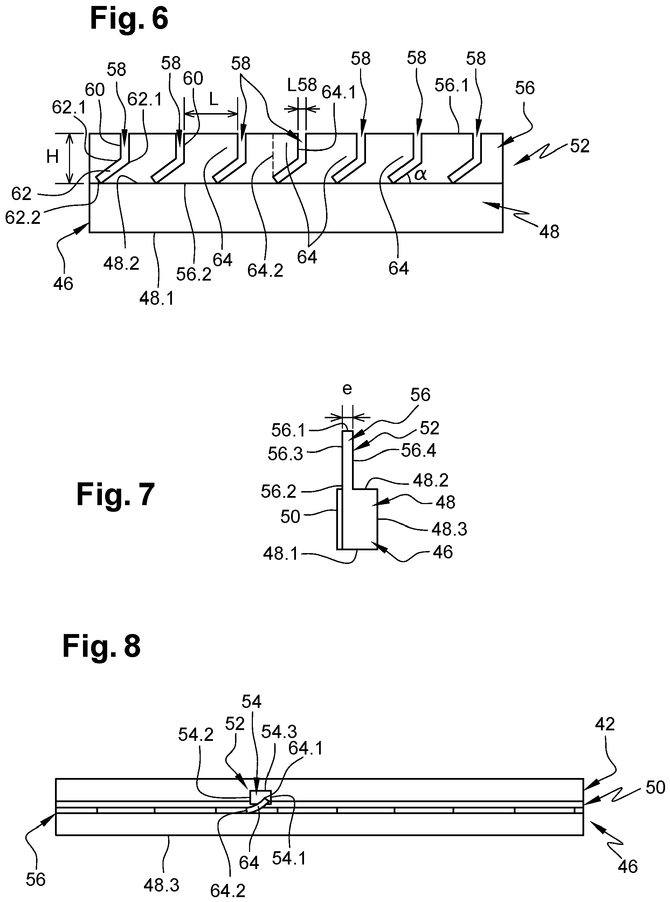

Selon un mode de réalisation, chaque fente 58 comprend un premier tronçon 60, orienté selon la direction longitudinale et débouchant au niveau de la première extrémité 56.1 de la portion tubulaire 56, ainsi qu'un deuxième tronçon 62 incliné s'étendant entre une première extrémité 62.1 reliée au premier tronçon 60 et une deuxième extrémité 62.2. Selon un mode de réalisation visible sur la figure 6, le premier tronçon 60 s'étend sur la première moitié supérieure de la portion tubulaire 56 et le deuxième tronçon 62 sur la deuxième moitié inférieure de la portion tubulaire 56. Selon un mode de réalisation, pour une tige filetée présentant un diamètre de l'ordre de 20 mm, chaque fente 58 a une largeur L58 de l'ordre de 1 mm et deux fentes 58 consécutives sont séparées d'une distance L de l'ordre de 9 mm au niveau de la première extrémité 56.1 de la partie tubulaire 56. La deuxième portion 62 forme un angle α de l'ordre de 30° avec un plan transversal. Les orientations inclinée et verticale des fentes 58 favorisent le vissage.

Bien entendu, l'invention n'est pas limitée à ce mode de réalisation pour les fentes 58.

Deux fentes 58 consécutives délimitent une languette 64. Selon une configuration, la partie tubulaire 56 comprend sept fentes 58 et sept languettes 64.

Chaque languette 64 est configurée pour occuper un état non déformé dans lequel la languette 64 n'est pas en saillie à l'intérieur de la partie tubulaire 56 et un état déformé dans lequel la languette 64 est au moins partiellement en saillie à l'intérieur de la partie tubulaire 56, comme illustré sur la figure 8.

Chaque languette 64 comprend un bord libre 64.1 et une ligne de pliage 64.2 lui permettant de pivoter entre les états non déformé et déformé. Selon le mode de réalisation visible sur la figure 6, la ligne de pliage 64.2 s'étend de la deuxième extrémité 62.2 du deuxième tronçon 62 jusqu'à la première extrémité 56.1 de la partie tubulaire 56 selon une direction approximativement parallèle à la direction longitudinale.

Lorsque l'écrou 46 est vissé sur la tige filetée 42, au moins une partie de la languette 64 est logée, à l'état déformé, dans l'une des gorges longitudinales 54, 54' de la tige filetée 42. Dans cet état déformé, le bord libre 64.1 de la languette 64 est en butée contre la première paroi latérale 54.1 de l'une des gorges longitudinales 54, 54'.

Bien entendu, l'invention n'est pas limitée au mode de réalisation illustré sur les figures 5 à 8 pour le système de verrouillage 52. Ainsi, ce dernier pourrait être identique à l'un de ceux décrits dans le document US6010289.

Quel que soit le mode de réalisation, l'espace annulaire entre la partie tubulaire 56 et la tige filetée 42 peut être réduit, voire nul.

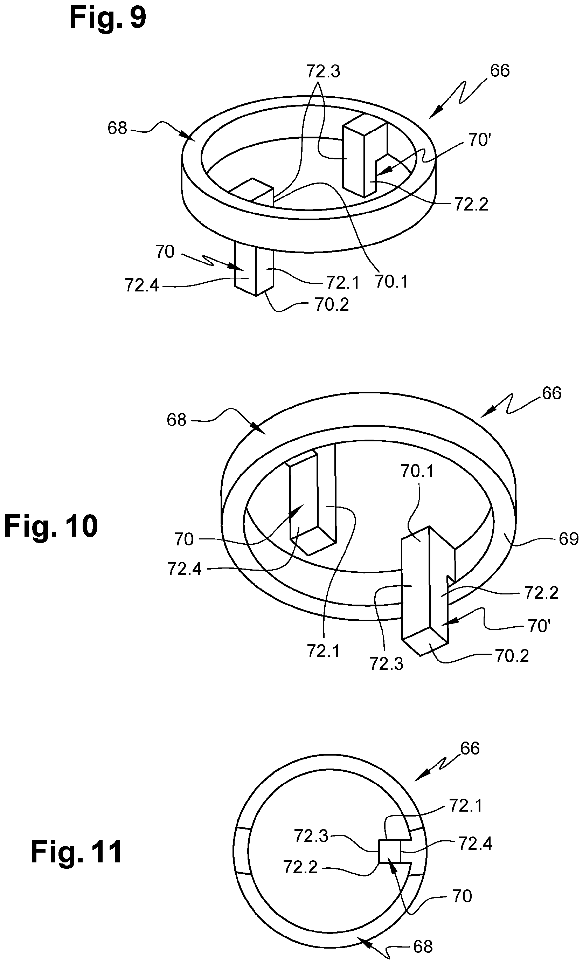

Un outil de déverrouillage 66 d'un système de verrouillage 56 d'un boulon est représenté sur les figures 9 à 11.

Selon un mode de réalisation, l'outil de déverrouillage 66 comprend un anneau 68, configuré pour être positionné autour de la tige filetée 42 en fonctionnement, ainsi qu'au moins un doigt 70 configuré pour se loger et coulisser dans une gorge longitudinale 54 de la tige filetée 42. Chaque doigt 70 s'étend entre une première extrémité 70.1 reliée à l'anneau 68 et une deuxième extrémité 70.2 libre.

Selon une configuration, l'anneau 68 a une section carrée ou rectangulaire et présente un diamètre intérieur légèrement supérieur au diamètre de la tige filetée 42 (ou sensiblement égal au diamètre intérieur de la partie tubulaire 56 de l'écrou 46) et un diamètre extérieur sensiblement égal au diamètre extérieur de la partie tubulaire 56 de l'écrou 46.

Chaque doigt 70 est orienté selon une direction sensiblement perpendiculaire au plan de l'anneau 68. En fonctionnement, l'anneau 68 est positionné dans un plan transversal et chaque doigt 70 est orienté selon la direction longitudinale.

Selon une configuration visible sur les figures 9 et 10, l'outil de déverrouillage 66 comprend deux doigts 70, 70', un pour chaque gorge longitudinale 54, 54'. Le nombre et la disposition des doigts 70, 70' sont déterminés en fonction du nombre et de la disposition des gorges longitudinales 54, 54'.

Selon une configuration, toutes les gorges longitudinales 54, 54' ont la même section transversale. Tous les doigts 70, 70' sont sensiblement identiques.

Chaque doigt 70 présente une première face latérale 72.1, une deuxième face latérale 72.2 sensiblement parallèle à la première face latérale 72.1, une face arrière 72.3 sensiblement perpendiculaire aux première et deuxième faces latérales 72.1, 72.2 et une face avant 72.4, opposée à la face arrière 72.3, configurée pour coopérer avec la (ou les) languette(s).

Les première et deuxième faces latérales 72.1 et 72.2 sont séparées d'une distance approximativement égale à celle séparant les première et deuxième parois latérales 54.1, 54.2 d'une gorge longitudinale 54. La face arrière 72.3 est configurée pour coulisser contre la paroi de fond 54.3 de la gorge longitudinale 54 en fonctionnement. Lorsque l'outil de verrouillage 66 comprend deux doigts 70, 70', ils sont configurés de sorte que leurs faces arrières 72.3 coulissent contre les parois de fond 54.3 des gorges longitudinales 54, 54' en fonctionnement. Ainsi, la distance séparant les faces arrières 72.3 des deux doigts 70, 70' est approximativement égale à celle séparant les parois de fond 54.3 des deux gorges longitudinales 54, 54'. Chaque doigt 70, 70' a une longueur (dimension prise selon la direction longitudinale) égale à la hauteur de la partie tubulaire 56.

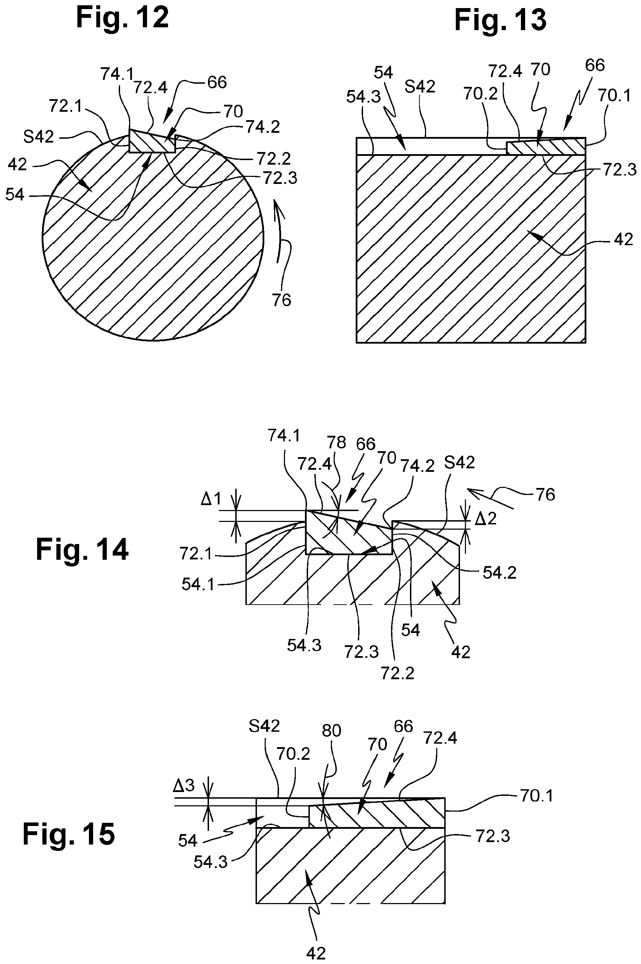

La face avant 72.4 est délimitée par une première arête 74.1 au niveau de la première face latérale 72.1 et une deuxième arête 74.2 au niveau de la deuxième face latérale 72.2, la deuxième arête 74.2 étant située en aval de la première arête 74.1 selon le sens de dévissage matérialisé par la flèche 76 sur les figures 12 et 14.

Selon une caractéristique, la face avant 72.4 de chaque doigt 70, 70' comprend une première inclinaison 78 telle que la première arête 74.1 soit en saillie ou au niveau de la surface latérale S42 de la tige filetée 42 et que la deuxième arête 74.2 soit en retrait ou au niveau de la surface latérale S42 de la tige filetée 42 afin d'éviter que la languette 64 ne soit bloquée dans l'une des gorges longitudinales 54, 54' lors du dévissage de l'écrou 46. Ainsi, la première face 72.1 a une largeur supérieure ou égale à la profondeur de chaque gorge longitudinale 54, 54' et la deuxième face latérale 72.2 a une largeur inférieure ou égale à la profondeur des gorges longitudinales 54, 54'. Selon une configuration, la deuxième arête 74.2 est en retrait par rapport à la surface latérale S42 de la tige filetée 42 afin d'éviter que la languette 64 ne soit bloquée dans l'une des gorges longitudinales 54, 54' lors du dévissage de l'écrou 46. Selon une configuration, la première arête 74.1 est en saillie par rapport à la surface latérale S42 de la tige filetée 42 afin de faciliter l'insertion du doigt 70, 70' entre la languette 64 déformée et la paroi de fond 54.3 de la gorge longitudinale 54, 54'.

Selon un mode de réalisation visible sur la figure 14, la première arête 74.1 et la surface latérale S42 de la tige filetée 42 sont séparées d'une première distance Δ1 de l'ordre de 0,5 mm. La deuxième arête 74.2 et la surface latérale S42 de la tige filetée 42 sont séparées d'une deuxième distance Δ2 de l'ordre de 0,5 mm. Ces valeurs sont données à titre d'exemple pour une tige filetée de l'ordre de 20 mm. Quelle que soit la valeur du diamètre de la tige filetée 42, les première et deuxième distances Δ1 et Δ2 sont sensiblement égales.

Selon une autre caractéristique visible sur la figure 15, la face avant 72.4 de chaque doigt 70 comprend une deuxième inclinaison 80 telle que chaque doigt présente une première épaisseur (distance entre les faces arrière et avant 72.3, 72.4) au niveau de la première extrémité 70.1 supérieure à une deuxième épaisseur (distance entre les faces arrière et avant 72.3, 72.4) au niveau de la deuxième extrémité 70.2 libre. Selon une configuration, dans un plan longitudinal médian (équidistant des première et deuxième faces latérales 72.1, 72.2), la face avant 72.4 est positionnée dans le prolongement de la face latérale S42 de la tige filetée 42 au niveau de la première extrémité 70.1 du doigt 70 et la face avant 72.4 est positionnée en retrait de la face latérale S42 de la tige filetée 42 (décalée vers l'intérieur de la paroi de fond 54.3 de la gorge longitudinale 54) au niveau de la deuxième extrémité 70.2 du doigt 70. Ainsi, la deuxième extrémité 70.2 a une épaisseur (dimension prise selon une direction radiale) inférieure à celle de la première extrémité 70.1. Cette configuration favorise l'insertion du doigt 70, 70' entre la languette 64 déformée et la paroi de fond 54.3 de la gorge longitudinale 54, 54'. Selon un mode de réalisation, la différence d'épaisseur Δ3 entre les première et deuxième extrémités 70.1, 70.2 est de l'ordre de 0,5 mm. Cette valeur est donnée à titre d'exemple pour une tige filetée de l'ordre de 20 mm. Quelle que soit la valeur du diamètre de la tige filetée 42, la différence d'épaisseur Δ3 entre les première et deuxième extrémités 70.1, 70.2 et les première et deuxième distances Δ1 et Δ2 entre la première ou deuxième arête 74.1, 74.2 et la surface latérale S42 de la tige filetée 42 sont approximativement égales.

Selon un mode d'utilisation, l'outil de verrouillage 66 est solidarisé à une clé à cliquet par tout moyen approprié, par exemple à l'aide d'une liaison de type magnétique.

Selon un mode de réalisation, au moins chaque doigt de l'outil de verrouillage 66 est réalisé en, ou recouvert par, un matériau présentant un faible coefficient de frottement avec la gorge longitudinale 54, 54' de la tige filetée 42, comme par exemple en polytétrafluoroéthylène, en cuivre ou en un matériau autolubrifiant.

Le mode de fonctionne de l'outil de déverrouillage 66 est le suivant :
Chaque doigt 70, 70' est inséré dans une gorge longitudinale 54, 54' et l'anneau 68 de l'outil de déverrouillage 66 est positionné autour de la tige filetée 42. L'outil de verrouillage 66 est alors translaté de la première extrémité 42.1 de la tige filetée 42 en direction de l'écrou 46 de sorte qu'au moins l'un des doigts 70, 70' soit intercalé entre la languette 64 déformée et la paroi de fond 54.3 de la gorge longitudinale 54 dans laquelle ladite languette 64 déformée est logée. L'outil de verrouillage 66 est alors translaté jusqu'à ce que la surface inférieure 69 de l'anneau 68 soit en contact avec la première extrémité 56.1 de la partie tubulaire 56 de l'écrou 46.

Si cette insertion est difficile du fait que la languette 64 déformée soit bloquée dans la gorge longitudinale 54, l'écrou 46 peut être légèrement vissé.

Dès lors que le doigt 70 est intercalé entre la languette 64 déformée et la paroi de fond 54.3 de la gorge longitudinale 54, l'écrou 46 peut être dévissé sans qu'aucune languette 64 ne se bloque dans l'une des gorges longitudinales 70, 70'. Lors de l'opération de dévissage de l'écrou 46, l'outil de verrouillage 66 se translate vers la première extrémité 42.1 de la tige filetée 42 de la même manière que l'écrou 46.

L'outil de déverrouillage selon l'invention ne comprend aucun élément configuré pour se loger entre la surface latérale S42 de la tige filetée 42 et la partie tubulaire 56. Ainsi, l'espace entre la surface latérale S42 de la tige filetée 42 et la partie tubulaire 56 peut être réduit au minimum.

## Revendications

1. Outil de déverrouillage configuré pour déverrouiller un système de verrouillage d'un boulon comportant une tige filetée (42) présentant une surface latérale (S42) et au moins une gorge longitudinale (54, 54') qui s'étend à partir d'une première extrémité (42.1) de la tige filetée (42), un écrou (46) configuré pour se visser sur la tige filetée (42), ainsi qu'un système de verrouillage (52), solidaire de l'écrou (46), comportant au moins une languette (64) configurée pour occuper un état non déformé dans lequel ladite languette (64) n'immobilise pas en rotation l'écrou (46) par rapport à la tige filetée (42) et un état déformé dans lequel ladite languette (64) est partiellement logée dans la gorge longitudinale (54, 54') et immobilise en rotation l'écrou (46) par rapport à la tige filetée (42), **caractérisé en ce que** l'outil de déverrouillage (66) comprend un anneau (68), configuré pour être positionné autour de la tige filetée (42) en fonctionnement, ainsi qu'au moins un doigt (70, 70'), s'étendant entre une première extrémité (70.1) reliée à l'anneau (68) et une deuxième extrémité (70.2) libre, configuré pour se loger et coulisser dans la gorge longitudinale (54, 54') de la tige filetée (42) en fonctionnement, chaque doigt (70, 70') comportant une face avant (72.4) délimitée par une première arête (74.1) et une deuxième arête (74.2) située en aval de la première arête (74.1) selon un sens de dévissage de l'écrou (46), la face avant (72.4) de chaque doigt (70, 70') présentant une première inclinaison (78) telle que la première arête (74.1) soit en retrait ou au niveau de la surface latérale (S42) de la tige filetée (42) et que la deuxième arête (74.2) soit en saillie ou au niveau de la surface latérale (S42) de la tige filetée (42).

2. Outil de déverrouillage selon la revendication 1, **caractérisé en ce que** la deuxième arête (74.2) est en retrait par rapport à la surface latérale (S42) de la tige filetée (42).

3. Outil de déverrouillage selon la revendication précédente, **caractérisé en ce que** la deuxième arête (74.2) et la surface latérale (S42) de la tige filetée (42) sont séparées d'une première distance (Δ2) de l'ordre de 0,5 mm.

4. Outil de déverrouillage selon l'une des revendications précédentes, **caractérisé en ce que** la première arête (74.1) est en saillie par rapport à la surface latérale (S42) de la tige filetée (42).

5. Outil de déverrouillage selon la revendication précédente, **caractérisé en ce que** la première arête (74.1) et la surface latérale (S42) de la tige filetée (42) sont séparées d'une deuxième distance (Δ1) de l'ordre de 0,5 mm.

6. Outil de déverrouillage selon l'une des revendications précédentes, **caractérisé en ce que** la face avant (72.4) de chaque doigt (70, 70') comprend une deuxième inclinaison (80) telle que chaque doigt (70, 70') présente une première épaisseur au niveau de la première extrémité (70.1) du doigt (70, 70') supérieure à une deuxième épaisseur au niveau de la deuxième extrémité (70.2) libre du doigt (70, 70').

7. Outil de déverrouillage selon la revendication précédente, **caractérisé en ce que** les première et deuxième épaisseurs présentent une différence d'épaisseur (Δ3) de l'ordre de 0,5 mm.

8. Outil de déverrouillage selon l'une des revendications précédentes, **caractérisé en ce que** chaque doigt (70, 70') présente des première et deuxième faces latérales (72.1, 72.2) séparées d'une distance approximativement égale à celle séparant des première et deuxième parois latérales (54.1, 54.2) d'une gorge longitudinale (54).

9. Outil de déverrouillage selon l'une des revendications précédentes, ledit outil de déverrouillage étant configuré pour une tige filetée (42) présentant deux gorges longitudinales (54, 54') diamétralement opposées, **caractérisé en ce que** l'outil de déverrouillage comprend deux doigts (70, 70'), un pour chaque gorge longitudinale (54, 54'), les doigts (70, 70') étant agencés de manière à ce que leurs faces arrières (72.3) coulissent contre des parois de fond (54.3) des deux gorges longitudinales (54, 54') en fonctionnement.

10. Outil de déverrouillage selon l'une des revendications précédentes, **caractérisé en ce qu'**au moins chaque doigt (70, 70') de l'outil de déverrouillage (66) est réalisé en, ou recouvert par, un matériau présentant un faible coefficient de frottement avec la gorge longitudinale (54, 54') de la tige filetée (42).
